# EUROPEAN PATENT SPECIFICATION

(11) **EP 0 239 996 B1**
(45) Date of publication and mention of the grant of the patent: **22.09.1993**
(21) Application number: 87104763.5
(22) Date of filing: 31.03.1987
(51) Int. Cl.: G11B 23/033, G11B 23/36, G11B 23/38

(54) **Container for use in containing a flexible magnetic disk with a magnetic recording medium attached to an outer container surface**
Kassette, die eine flexible magnetische Platte enthält mit einem Magnetaufzeichnungsmittel, das auf der äusseren Kassettenoberfläche befestigt ist
Cassette contenant un disque magnétique flexible avec support d'enregistrement magnétique attaché à la surface extérieure de la cassette

(30) Priority: 31.03.1986 JP 47773/86; 14.04.1986 JP 54847/86; 13.09.1986 JP 139971/86; 14.11.1986 JP 174134/86
(43) Date of publication of application: 07.10.1987
(73) Proprietor: TOKIN CORPORATION, Sendai-shi Miyagi-ken (JP)
(72) Inventor: Kogo, Masanori, Sendai-shi Miyagi-ken (JP)
(74) Representative: Prüfer, Lutz H., Dipl.-Phys.

(56) References cited:
- EP-A- 0 160 538
- Patent Abstracts of Japan, vol. 9, no. 334 (P-417)(2057) 27 December 1985; & JP-A-60 157787
- Patent Abstracts of Japan, vol.10, no. 334 (P-515)(2390) 13 November 1986; & JP-A-61 137291
- IBM TECHNICAL DISCLOSURE BULLETIN, vol. 27, no. 2, July 1984, NEW YORK, US, page 977 P.R. BAREMAN: "CARTRIDGE FOR AUTOMATIC RETRIEVAL"
- IBM TECHNICAL DISCLOSURE BULLETIN, vol. 22, no. 3, August 1979, NEW YORK, US, page 1183 C.A. BRUCE: "VIDEO DISK WITH UPDATING FEATURE"
- Patent Abstracts of Japan, vol.10, no. 143 (P-459)(2200) 27 May 1986; & JP-A-60 261084
- Patent Abstracts of Japan, vol. 7, no. 125 (P-200)(1270) 31 May 1983; JP-A-58 41472
- Patent Abstracts of Japan, vol. 9, no. 113 (P-356)(1836) 17 May 1985; & JP-A-60 651
- Patent Abstracts of Japan, vol. 9, no. 170 (P-373)(1893) 16 July 1985; & JP-A-60 45989

## Description

This invention relates to a container according to the preamble of claim 1.

Such a flexible magnetic disk is for magnetic recording of filing information such as computer program and/or data to be processed and is well known in the art as a floppy disk. The flexible magnetic disk is contained in a container to form a magnetic disk unit. When the magnetic disk unit is loaded to a magnetic disk recording and/or reproducing device having a magnetic recording and/or reproducing head, the filing information can be recorded and/or reproduced by making the head access the flexible magnetic disk.

Such containers are generally classified into three types in the art.

A container of a first type as disclosed in the JP-A-60-157 787 is made of thin and soft plastic material and is therefore called a soft jacket in the art. The container of the first type has an opening for permitting the head to access the flexible magnetic disk and an outer container surface restricted by the opening.

A container of a second type as disclosed in JP-A-60-261 084 comprises a containing casing for containing the flexible magnetic disk. The containing casing is made of a thick and hard plastic material. Therefore, the container of the second type is called either a hard jacket or a cartridge in the art. The containing casing has an opening for permitting the head to access the flexible magnetic disk and an outer casing surface.

A container of a third type is given by the preamble of claim 1 and disclosed in the EP-A2-0 160 538; it comprises a containing casing like the container of the second type. The container of the third type further comprises a shutter of, for example, a metal or a plastic material having an outer shutter surface. The shutter is mechanically coupled to the containing casing to shut the opening and is slidable on the containing casing to selectively open the opening.

In general, conventional flexible magnetic disk units are associated with entry labels for writing file administration informataion for use in administrating the filing information. The label is affixed onto a part of the outer container surface, such as the outer casing surface. When the magnetic disk unit is used by a user of the magnetic disk unit, the user handwrites the file administration information on the label as an index of the disk unit. The file administration information can be a title representative of a content recorded into the flexible magnetic disk, a classification number assigned to the content, and/or other information as required by user.

Particular information profitable for maker side of the magnetic disk unit is also printed on another part of the outer container surface, such as the outer casing surface and the outer shutter surface, by the maker side. The particular information may be, for example, a manufactured lot number of the magnetic disk unit and/or other information desired by the maker side.

Inasmuch as the user and a person of the maker side read and judge the handwritten file administration information and the printed particular information, respectively, it is impossible to automatically administrate the magnetic disk unit by making use of a data processing device. This means that the user and the person suffer from a considerable task for administrating the magnetic disk unit. Thus, the conventional container for the disk unit is defective in impossibility of automatic administration of the magnetic disk unit.

It is therefore an object of this invention to provide a container for use in containing a flexible magnetic disk, which container is suitable for automatically administrating a magnetic disk unit using the container with the flexible magnetic disk container therein.

It is another object of this invention to provide a container of the type described, which is suitable for saving task on administrating the magnetic disk unit.

These objects are solved by a container with the features of claim 1.
Fig. 1 is a front view of a magnetic disk unit comprising a container having a magnetic recording medium according to a first embodiment of this invention;
Fig. 2 is a rear view of the magnetic disk unit of Fig. 1;
Fig. 3 is a partial sectional view for illustrating another type of magnetic recording medium mounted on the container illustrated in Figs. 1 and 2;
Fig. 4 is a perspective view of another magnetic disk unit comprising a container having a magnetic recording medium according to a second embodiment of this invention;
Fig. 5 is a sectional view taken along a line 5-5 in Fig. 4;
Fig. 6 is a front view of the magnetic disk unit of Fig. 4 with a shutter closing a casing opening;
Fig. 7 is a front view of the magnetic disk unit of Fig. 4 with the shutter moved to open the casing opening;
Figs. 8-12 are views illustrating different modifications of Fig. 4;
Fig. 13 is a partially cut perspective view for illustrating another type of the magnetic recording medium which can be used in embodiments of Figs. 4-12;
Fig. 14 is a perspective view of a shutter according to a further embodiment of this invention; and
Fig. 15 is a sectional view of a magnetic recording index tape which is usefull for the magnetic recording medium mounted on the container according to this invention.

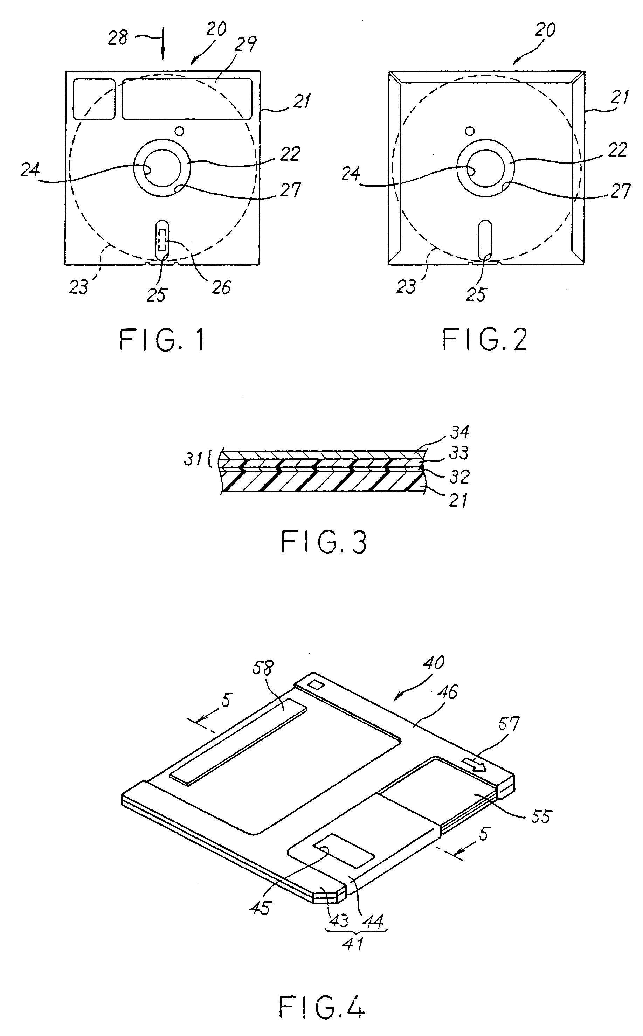

Referring to Figs. 1 and 2, a magnetic disk unit 20 comprises a container 21 according to a first embodiment of this invention and a flexible magnetic disk 22 contained in the container 21.

The flexible magnetic disk 22 has a circular periphery 23 and a center hole 24. The flexible magnetic disk 22 has a diameter of, for example, 5.25 inches (13.3 cm) or 8 inches (20.3 cm). The flexible magnetic disk 22 is for magnetic recording of filing information.

The container 21 is made of a thin and soft plastic material and forms a soft jacket having confronting front and rear cover plates. The container 21 has a pair of openings 25 formed in the front and rear cover plates, respectively, for permitting a magnetic recording and/or reproducing head 26 illustrated by a phantom line in Fig. 1 to access the flexible magnetic disk 22 contained in the container. The container 21 also has a pair of central holes 27 formed in the front and rear cover plates, respectively. Each of the central holes 27 has a diameter largaer than that of the center hole 24 of the flexible magnetic disk 22. The container 21 has an outer container surface restricted by the opening pair 25 and the central hole pair 27.

When the magnetic disk unit 20 is inserted into a magnetic disk recording and/or reproducing device having the magnetic recording and/or reproducing head 26 in a direction designated by an arrow 28 illustrated in Fig. 1, the opening 25 is located under the head 26 as illustrated in Fig. 1. In this state, the filing information can be recorded and/or reproduced by making the head 26 access the flexible magnetic disk 22.

A magnetic recording medium 29 is mounted on a predetermined area of the outer container surface. the magnetic recording medium 29 is for magnetic recording of information, such as file administration information, particular information, or the like.

The file administration information is profitable for a user side of the magnetic disk unit 20 as an index of the magnetic disk unit 20. The file administration information is for use in efficiently administrating the filing information at the user side. The file administration information is representative of, for example, a title of a content recorded into the flexible magnetic disk 22, a classification number assigned to the content, and/or other items as desired by the user. The file administration information can be recorded and instantaneously reproduced by using a magnetic recording and reproducing arrangement.

On the other hand, the particular information is profitable for a maker side of the magnetic disk unit 20. The particular information is representative of, for example, a manufactured date of the magnetic disk unit 20, a manufactured lot number of the magnetic disk unit 20, an output level of recording and/or reproducing of the filing information, a degree of quality of recording tracks of the flexible magnetic disk 22, an insurance value of durability, and/or other items desired by the maker side. Thus, the particular information is useful in maintenance of the magnetic disk unit 20. The particular information can also be recorded and reproduced by using the magnetic recording and reproducing arrangement.

Inasmuch as the file administration information and the particular information can be judged by using the recording and reproducing arrangement, it is possible to automatically administrate the magnetic disk unit 20 having the container 21. More specifically, it is possible to search for a specific one among a lot of the magnetic disk units 20 stored in a disk unit storage device. Thus, the container 21 is suitable for automatically administrating the magnetic disk unit 20.

The magnetic recording medium 29 is a magnetic layer deposited on the outer container surface. The magnetic recording medium 29 is manufactured by the use of a process selected from a group consisting of sputtering, vacuum evaporation, chemical vapor deposition, and screen printing.

No limitation is imposed on a position, a shape, and a thickness of the magnetic recording medium 29 to be mounted on the outer container surface unless the magnetic recording medium 29 becomes a bar for using the magnetic disk unit 20 in the magnetic disk recording and/or reproducing device. That is, the magnetic recording medium 29 must be mounted on the container 21 so that the magnetic recording medium 29 does not interfere with insertion and extraction of the magnetic disk unit 20 for the magnetic recording and/or reproducing device as well as recording and/or reproducing operation of the magnetic recording and/or reproducing device for the magnetic disk unit 20.

Referring to Fig. 3, another example 31 is shown as the magnetic recording medium which is mounted on the predetermined area of the outer container surface of the container 21. The magnetic recording medium 31 shown therein is used instead of the magnetic recording medium 29 illustrated in Fig. 1 and is a magnetic film affixed onto the outer container surface by adhesive agent 32. More particularly, the magnetic film 31 comprises a thin carrier tape 33 of a soft plastic material and a magnetic layer 34 formed on the tape 33. The tape 33 is affixed onto the outer container surface by the adhesive agent 32.

Referring to Figs. 4 to 7, another magnetic disk unit 40 comprises a container 41 according to a second embodiment of this invenion and a flexible magnetic disk 42 contained in the container 41. The flexible magnetic disk 42 has a diameter of, for example, 3.5 inches (8.9 cm).

The container 41 comprises a containing casing 43 for containing the magnetic flexible disk 42 and a shutter 44 of a metal having a pair of shutter openings 45. The containing casing 43 is made of a thick and hard plastic material so as to form a hard jacket or a cartridge.

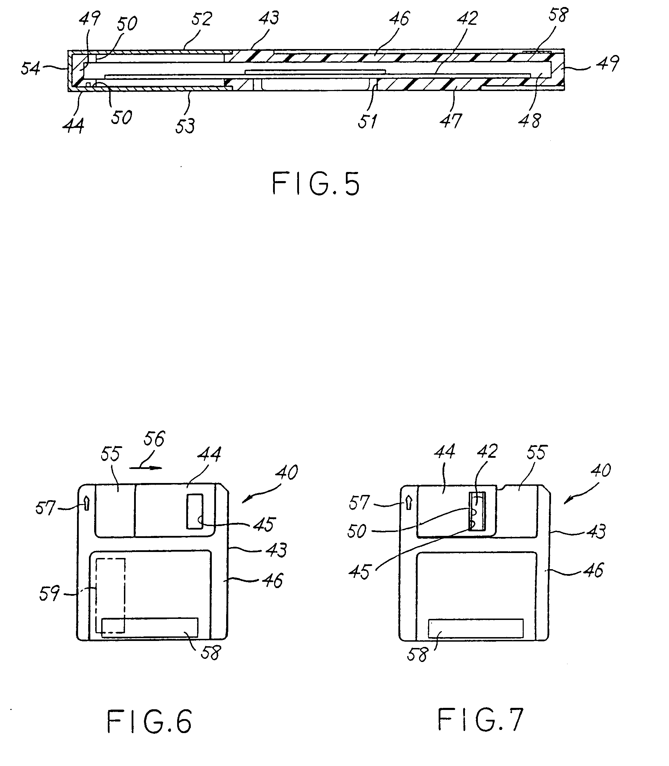

The containing casing 43 comprises a pair of generally flat front and rear plates 46 and 47 which confront with a space 48 left therebetween, as shown in Fig. 5. Each of the flat plates 46 and 47 has a rectangular periphery. A bridging wall 49 bridges the peripheries of the flat plates 46 and 47 to define the space 48 as a containing space for containing the flexible magnetic disk 42.

The containing casing 43 has a pair of casing openings 50 in the confronting flat plates 46 and 47, respectively, for permitting the magnetic recording and/or reproducing head 26 (Fig. 1) to access the flexible magnetic disk 42 therethrough. The containing casing 43 further has a central hole 51 formed in the rear plate 47 and has an outer casing surface restricted by the casing opening pair 50 and the central hole 51.

The shutter 44 comprises a pair of flat elements 52 and 53 overlying on the pair of flat plates 46 and 47, respectively. Both of the flat plates 46 and 47 are connected by a side element 54 overlying on the bridging wall 49 as shown in Fig. 5. The shutter openings 45 are formed in the flat plates 46 and 47, respectively.

The shutter 44 is mechanically coupled to the containing casing 43 to shut casing opening pair 50 as depicted in Figs. 4 and 6. The shutter 44 is slidable on a preselected area 55 of the outer casing surface to selectively open the casing opening pair 50 through the shutter opening pair 45 as depicted in Fig. 7. The shutter 44 is energized by a spring (not shown) in a direction designated by an arrow 56 illustrated in Fig. 6, and therefore, shuts the casing opening pair 50 normally.

When the magnetic disk unit 40 is inserted into a magnetic disk recording and/or reproducing device of the type described in a direction designated by an arrow 57 indicated on the containing casing 43, the shutter 44 is forcedly slided to open the casing opening pair 50. As a result,the shutter opening pair 45 and the casing opening pair 50 are located under the head 26 (Fig. 1). In this state, the filing information can be recorded and/or reproduced by making the head 26 (Fig. 1) access the flexible magnetic disk 42.

The outer casing surface consists of the preselected area 55 and a specific area of the outer casing surface except the preselected area 55. A magnetic recording medium 58 is mounted on a predetermined area of the specific area of the outer casing surface. In this embodiment, the predetermined area is selected on a surface of the front flat plate 46. The magnetic recording medium 58 is for magnetic recording of information, such as the file administration information, the particular information, or the like as described above in connection with the magnetic recording medium 29 illustrated in Fig. 1.

The magnetic recording medium 58 is a magnetic layer deposited on the outer casing surface. The magnetic recording medium 58 is formed by the use of a process selected from a group consisting of sputtering, vacuum evaporation, and chemical vapor deposition, similarly to the magnetic recording medium 29 of Fig. 1.

Instead of the magnetic layer deposited on the outer casing surface as the maganetic recording medium 58, a magnetic film similar to the magnetic film 31 illustrated in Fig. 3 may be affixed on the outer casing surface of the casing 43.

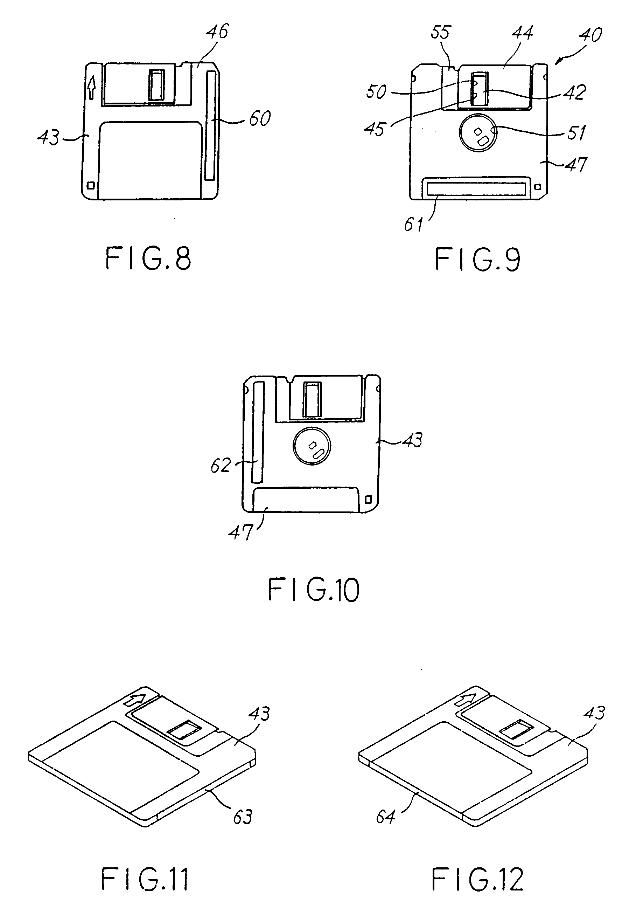

The magnetic recording medium 58 may be mounted at a position different from the mounting position of the medium 58 in Figs. 4 - 7. For example, the magnetic recording medium 58 can be located at a position 59 shown by a phantom line in Fig. 6 or another position shown by 60 in Fig. 8.

The magnetic recording medium can be mounted on the rear flat plate 47, for example, as shown by 61 and 62 in Figs. 9 and 10, respectively.

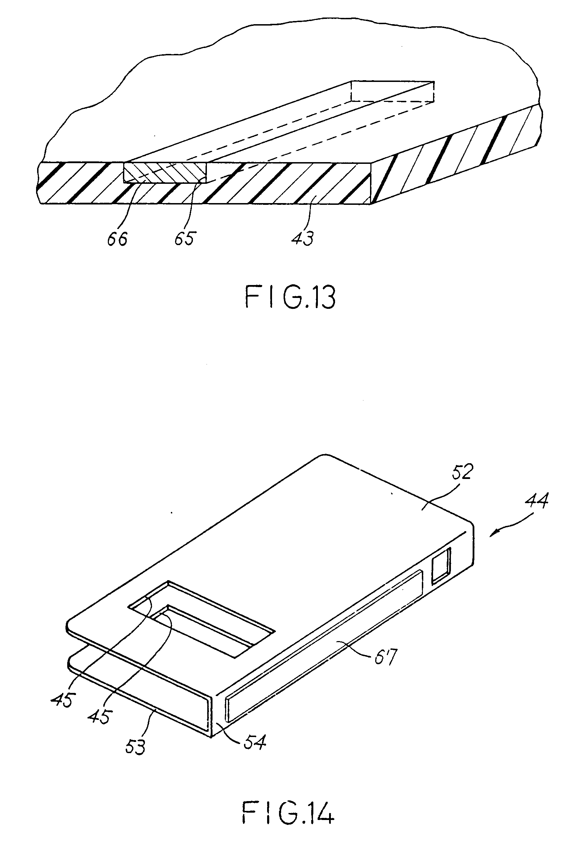

Further, the magnetic recording medium can also be mounted at a position of a side surface of the casing 43, as shown by 63 and 64 in Figs. 11 and 12, respectively.

As the magnetic recording medium which is mounted on the outer casing surface of the containing casing 43, a magnetic plate can also be used instead of the magnetic layer deposited on the containing casing 43 and the magnetic film affixed on the containing casing 43 as described above.

Referring to Fig. 13, the containing casing 43 has a groove 65 in its outer surface. A magnetic recording plate 66 is closely fitted into the groove 65. As a result, the magnetic recording plate 66 is fixedly mounted onto the outer casing surface.

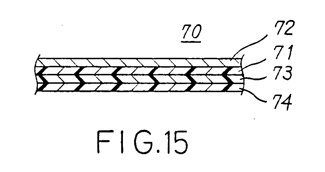

Referring to Fig. 14, a magnetic recording medium 67 can be mounted on the shutter 44 according to a further embodiment of this invention.

The side element 54 of the shutter 44 has an outer side element surface included in the outer shutter surface. The magnetic recording medium 67 is mounted on a predetermined area of the outer side element surface of the outer side element 54 as shown in the figure.

The magnetic recording medium 67 is a magnetic layer deposited on the outer side element 54 like the magnetic recording medium 58 illustrated in Fig. 4.

The magnetic recording medium 67 may be a magnetic plate fixedly mounted on the outer shutter surface like the magnetic recording medium 66 of a plate shape illustrated in Fig. 13.

The magnetic medium 67 may also be a magnetic film affixed onto the outer shutter surface by adhesive agent like the magnetic film 31 illustrated in Fig. 3.

As the magnetic film as shown at 31 in Fig. 3, which is used for each of magnetic recording media (29 in Fig. 1, 58 in Fig. 4, 60 in Fig. 8, 61 in Fig. 9, 62 in Fig. 10, 63 in Fig. 11, 64 in Fig. 12, and 67 in Fig. 14), a magnetic recording index tape can be provided in a separate body from the disk unit.

Referring to Fig. 15, the magnetic recording index tape 70 comprises a thin non-magnetic carrier tape 71 which has a main surface and an opposite surface opposite to the main surface. A magnetic coating 72 is formed on the main surface of the carrier tape 71. An adhesive layer 73 is coated on the opposite surface of the carrier tape 71. A protective sheet 74 removably covers the adhesive layer 73. When the magnetic recording index tape 70 is applied onto the magnetic disk unit, the protective sheet 74 is removed and the tape is affixed onto an outer surface of the unit by the adhesive layer 73.

The magnetic recording index tape 70 can be provided as a piece of small ribbon like tape having a length adaptable to the disk unit.

Alternatively, the magnetic recording index tape 70 can also be provided as a lengthy tape which is wound. The user can obtain a piece of a desired length by cutting the lengthy tape and can apply the piece onto his disk unit.

The adhesive layer 73 and the protective sheet 74 can be omitted so that the index tape consists of the carrier tape 71 and the magnetic coating 72. In use of the tape, the user must deposite adhesive agent on the tape before applying the tape onto his disk unit.

While this invention has thus far been described in conjunction with several embodiments thereof, it will readily possible for those skilled in the art to put this invention into practice in various other manners. For example, the shutter 44 illustrated in Figs. 4 and 14 may be made of various other materials, such as a plastic material and the like. In Figs. 4 - 12, the shutter 44 may be removed from the container 41 so as to form a container of a second type described in the preamble of the instant specification.

In accordance with a preferred embodiment of the invention a magnetic disk unit is provided, wherein said magnetic film comprises a thin carrier tape and a magnetic layer formed on said tape, said tape being affixed onto said predetermined area of said outer container surface by said adhesive agent.

Further a magnetic recording index tape adaptable to be affixed on an outer container surface of a container of a magnetic disk unit for magnetic recording of administration information as an index of said disk unit is provided, said unit comprising said container and a flexible magnetic disk contained therein, which comprises a thin non-magnetic carrier tape having a main surface and an opposite surface opposite to said main surface, and a magnetic coating on the main surface of said carrier tape.

The magnetic recording index tape may further comprise an adhesive layer coated on the opposite surface of said carrier tape and a protective sheet removably covering said adhesive layer, said protective sheet being uncovered on use of said index tape for said flexible magnetic disk unit.

## Claims

1. A container (41), comprising a hard containing casing (43) for containing a flexible magnetic disk (42) and a shutter (44) having an outer shutter surface, said containing casing (43) having an opening (50) for permitting a magnetic recording and/or reproducing head (26) to access said flexible magnetic disk (42), said containing casing (43) having an outer casing surface, said shutter (44) being mechanically coupled to said containing casing (43) to shut said opening (50) and being slidable on a preselected area (55) of said outer casing surface to selectively open said opening, characterized by a magnetic recording medium (67) mounted on a predetermined area of said outer shutter surface, said magnetic recording medium (67) being for magnetic recording of information.

2. A container as claimed in claim 1, wherein said magnetic recording medium (67) is a magnetic layer (72) deposited on said predetermined area of said outer shutter surface.

3. A container as claimed in claim 1, wherein said magnetic recording medium (67) is a magnetic plate (66) fixedly mounted on said predetermined area of said outer shutter surface.

4. A container as claimed in claim 1, wherein said magnetic recording medium (67) is a magnetic film (31) affixed onto said predetermined area of said outer shutter surface by adhesive agent.

5. A container as claimed in claim 4, wherein said magnetic film (31) comprises a thin carrier tape (71) and a magnetic layer (72) formed on said tape (71), said tape (71) being affixed onto said predetermined area of said outer shutter surface by said adhesive agent.

6. A container as claimed in one of claims 1 to 5, said containing casing (43) comprising a pair of generally flat plates (46, 47) confronting with a space (48) left therebetween and having peripheries, respectively, and a bridging wall (49) bridging said peripheries of said pair of flat plates (46, 47) to define said space (48) as a containing space for containing said flexible magnetic disk (42), said shutter (44) comprising a pair of flat elements (52, 53) overlying on said pair of flat plates (46, 47), respectively, and a side element (54) overlying on said bridging wall (49), said side element (54) having an outer side element surface, wherein said predetermined area is on said outer side element surface, said magnetic recording medium (67) being mounted on said predetermined area of said outer side element surface.

## Patentansprüche

1. Behälter (41) mit einem harten Behältergehäuse (43) zum Aufnehmen einer flexiblen Magnetplatte (42) und einem Verschluß (44) mit einer äußeren Verschlußoberfläche, wobei das Behältergehäuse (43) eine Öffnung aufweist zum Ermöglichen, daß ein magnetischer Aufzeichnungs- und/oder Wiedergabekopf (26) Zugriff zu der flexiblen Magnetplatte (42) hat, das Behältergehäuse (43) eine äußere Gehäuseoberfläche aufweist, der Verschluß (44) mechanisch mit dem Behältergehäuse (43) zum Schließen der Öffnung verbunden ist und verschiebbar auf einer vorausgewählten Fläche (55) der äußeren Gehäuseoberfläche zum selektiven Öffnen der Öffnung ist,
gekennzeichnet durch ein auf einer vorbestimmten Fläche der äußeren Verschlußoberfläche angebrachtes magnetisches Aufzeichnungsmedium (67), das zum magnetischen Aufzeichnen von Informationen dient.

2. Behälter nach Anspruch 1, bei dem das magnetische Aufzeichnungsmedium (67) eine Magnetschicht (72) ist, die auf der vorbestimmten Fläche der äußeren Verschlußoberfläche abgeschieden ist.

3. Behälter nach Anspruch 1, bei dem das magnetische Aufzeichnungsmedium (67) eine Magnetplatte (66) ist, die fest auf der vorbestimmten Fläche der äußeren Verschlußoberfläche angebracht ist.

4. Behälter nach Anspruch 1, bei dem das magnetische Aufzeichnungsmedium (67) ein Magnetfilm (31) ist, der auf der vorbestimmten Fläche der äußeren Verschlußoberfläche durch ein Klebemittel befestigt ist.

5. Behälter nach Anspruch 4, bei dem der Magnetfilm (31) ein dünnes Trägerband (71) und eine auf dem Band (71) gebildete Magnetschicht (72) aufweist, wobei das Band (71) auf der vorbestimmten Fläche der äußeren Verschlußoberfläche durch das Klebemittel befestigt wird.

6. Behälter nach einem der Ansprüche 1 bis 5, wobei das Behältergehäuse (43) ein Paar von im allgemeinen flachen Platten (46, 47), die einander gegenüber stehen mit einem dazwischen gelassenen Raum (48) und entsprechende Umfänge aufweisen und eine Überbrückungswand (49), die die Umfänge des Paares von flachen Platten (46, 47) zum Definieren des Raumes (48) als Aufnahmeraum zum Aufnehmen der flexiblen Magnetplatte (42) überbrückt, aufweist, der Verschluß (44) ein Paar von flachen Elementen (52, 53), die auf dem Paar von entsprechenden flachen Platten (46, 47) liegen, und ein Seitenelement (54), das auf der Überbrückungswand (49) liegt, aufweist, das Seitenelement (54) eine äußere Seitenelementoberfläche aufweist, bei dem die vorbestimmte Fläche auf der äußeren Seitenelementoberfläche ist, das magnetische Aufzeichnungsmedium (67) auf der vorbestimmten Fläche der äußeren Seitenelementoberfläche angebracht ist.

## Revendications

1. Cassette (41) comprenant un boîtier de logement dur (43) destiné à contenir un disque magnétique flexible (42), et un volet (44) présentant une surface extérieure de volet, le boîtier de logement (43) comportant une ouverture (50) destinée à permettre à une tête d'enregistrement et/ou de lecture magnétique (26), d'accéder au disque magnétique flexible (42), le boîtier de logement (43) présentant une surface de boîtier extérieure, le volet (44) étant couplé mécaniquement au boîtier de logement (43) pour fermer l'ouverture (50) et ce volet pouvant glisser sur une zone présélectionnée (55) de la surface extérieure du boîtier pour ouvrir sélectivement l'ouverture, cassette caractérisée en ce qu'elle comprend un support d'enregistrement magnétique (67) monté sur une zone prédéterminée de la surface extérieure du volet, ce support d'enregistrement magnétique (67) étant destiné à l'enregistrement magnétique d'une information.

2. Cassette selon la revendication 1, caractérisée en ce que le support d'enregistrement magnétique (67) est une couche magnétique (72) déposée sur la zone prédéterminée de la surface extérieure du volet.

3. Cassette selon la revendication 1, caractérisée en ce que le support d'enregistrement magnétique (67) est une plaque magnétique (66) montée de façon fixe sur la zone prédéterminée de la surface extérieure du volet.

4. Cassette selon la revendication 1, caractérisé en ce que le support d'enregistrement magnétique (67) est un film magnétique (31) fixé par un agent adhésif sur la zone prédéterminée de la surface extérieure du volet.

5. Cassette selon la revendication 4, caractérisée en ce que le film magnétique (31) comprend une bande de support mince (71) et une couche magnétique (72) formée sur la bande (71), cette bande (71) étant fixée par l'agent adhésif sur la zone prédéterminée de la surface extérieure du volet.

6. Cassette selon l'une quelconque des revendications 1 à 5, caractérisée en ce que le boîtier de logement (43) comprend une paire de plaques généralement plates (46, 47) venant en face l'une de l'autre de manière à laisser un espace (48) entre elles, ces plaques comportant des pourtours respectifs et une paroi de liaison (49) reliant les pourtours de la paire de plaques plates (46, 47) pour définir l'espace (48) servant d'espace de logement du disque magnétique flexible (42), le volet (44) comprenant une paire d'éléments plats (52, 53) venant respectivement en recouvrement sur la paire de plaques plates (46, 47), et un élément latéral (54) venant en recouvrement sur la paroi de liaison (49), cet élément latéral (54) présentant une surface extérieure d'élément latéral, de façon que la zone prédéterminée soit située sur la surface extérieure de l'élément latéral, et le support d'enregistrement magnétique (67) étant monté sur la zone prédéterminée de la surface extérieure de l'élément latéral.
